# EUROPÄISCHE PATENTANMELDUNG

(11) **EP 3 564 697 A2**
(43) Veröffentlichungstag der Anmeldung: **06.11.2019**
(21) Anmeldenummer: 19171480.7
(22) Anmeldetag: 29.04.2019
(51) Int. Cl.: G01S 5/02

(54) **SYSTEM UND VERFAHREN ZUR ERMITTLUNG EINER ORTSBEZOGENEN FUNKFELDCHARAKTERISTIK IN INNENRÄUMEN**

(30) Priorität: 30.04.2018 DE 102018110327
(71) Anmelder: Tridonic GmbH & Co. KG, 6851 Dornbirn (AT)
(72) Erfinder: Borsoi, Giulio, 6850 Dornbirn (AT)
(74) Vertreter: Beder, Jens

(57) **Zusammenfassung**

Das Verfahren zur Ermittlung einer ortsbezogenen Funkfeldcharakteristik in einem Gebäude nutzt eine Vorrichtung mit einem Empfänger und einem Prozessor. In dem Gebäude eine Vielzahl von Signalen von Funksendern empfangbar. Das Verfahren ermittelt eine Funkfeldcharakteristik für zumindest eine Position in dem Gebäude. Die ermittelte Funkfeldcharakteristik wird zugeordnet zu einer Positionsinformation für die Position gespeichert. Die Positionsinformation zu der ermittelten Funkfeldcharakteristik wird dabei mittels eines unabhängigen Verfahrens zur Ortsbestimmung ermittelt.

## Beschreibung

Die Erfindung betrifft ein Verfahren und ein System zur Ermittlung ortsbezogener Funktfeldcharakteristiken insbesondere zur Inbetriebnahme eines funkbakenbasierten Systems zur Ortsbestimmung in Innenräumen und insbesondere zur Erstellung einer Karte ortsbezogener Funkfeldcharakteristiken für ein System zur Ortsbestimmung in Innenräumen.

Funkbaken-basierte Systeme zur Ortsbestimmung (auch: Lokalisierung) basieren auf einem Sender-Empfänger-Prinzip. Dazu werden in einem Raum oder über ein oder mehrere Gebäude hinweg kleine Sender (engl.: beacon für Bake, hier insbesondere auch Funkbake) als Signalgeber platziert, die Navigationssignale in festen Zeitintervallen senden. Kommt ein mobiler Empfänger, zum Beispiel ein Smartphone mit einem entsprechenden installierten Anwendungsprogramm, der für den Empfang der Navigationssignale konfiguriert ist, in die Reichweite zumindest eines der Sender, so kann eine eindeutige Kennung des Senders aus dem Navigationssignal identifiziert und eine Signalstärke des empfangenen Navigationssignals ermittelt werden. Sind mindestens drei Sender in Reichweite des mobilen Empfängers, so ist, z. B. mittels Trilateration, eine Position des Empfängers im zweidimensionalen Raum zu errechnen. Alternativ kann auch sog. "Fingerprinting" (etwa: "Fingerabdrücke nehmen") eingesetzt werden. Vorteilhaft beim "Fingerprinting" ist, dass nicht wie zur Trilateration mindestens 3 Sender empfangbar sein müssen.

Unter "Fingerprinting" in lokalen Funknetzwerken, zum Beispiel auch WLANs, versteht man das Aufzeichnen von empfangenen Funksignalen an einem bestimmten Ort und zu einer bestimmten Zeit. Beispielsweise werden von WLAN-Netzwerkzugangsgeräten (Routern) ausgestrahlte Sendesignale aufgezeichnet. Durch Erfassung einer MAC-Adresse, eines Namens des WLANs sowie der Empfangssignalstärken der empfangenen WLAN-Signale kann ein charakteristischer Fingerabdruck der empfangbaren WLANs für den Ort der Messung erstellt werden.

Auf Basis der erfassten Daten des charakteristischen Fingerabdrucks kann eine Lokalisierung erfolgen. Dies ist vor allem in Gebäuden und geschlossenen Räumen sinnvoll und vorteilhaft, in denen die Navigationssignale eines satellitengestützten Navigationssystems nicht zuverlässig oder überhaupt nicht zu empfangen sind und damit nicht zur Positionsbestimmung genutzt werden können.

Auf mobilen Endgeräte, zum Beispiel Smartphones, werden dazu Anwendungsprogramme installiert, die aus den erfassten Funksignal-Fingerabdrücken ermitteln, wo sich das mobile Endgerät gerade befindet. Dazu erfasst das mobile Endgerät zunächst einen charakteristischen Fingerabdruck seiner augenblicklichen Position und vergleicht diesen aktuellen charakteristischen Fingerabdruck mit den in einer Datenbank gespeicherten Daten.

Die Datenbank speichert Positionsinformation zugeordnet zu den jeweiligen charakteristischen Fingerabdrücken.

So kann das mobile Endgerät feststellen, ob es sich in der Nähe einer bekannten Position befindet.

Für die Installation eines solchen Systems zur funkbakenbasierten Ortsbestimmung in Innenräumen ist also die Erfassung des jeweiligen charakteristischen (Funk-) Fingerabdrucks, im Folgenden als ortsbezogene Funkfeldcharakteristik bezeichnet, in Verbindung mit der jeweiligen Position erforderlich. Dies ist über den gesamten Abdeckungsbereich des Systems zur Ortsbestimmung in möglichst großer Dichte und Genauigkeit notwendig, um eine Datenbank aufzubauen. Allerdings ist die jeweilige Position oftmals nur mit geringer Genauigkeit bekannt. Sie wird derzeit in der Regel manuell eingegeben und ist somit fehlebehaftet. Der Prozess der Installation und insbesondere Kalibrierung eines Systems zur Ortsbestimmung im Innenbereich auf Basis von Funkbaken ist aufgrund der manuellen Eingabe auch zeitaufwendig.

Es ist daher die technische Aufgabe zu lösen, die Installation und Inbetriebnahme eines Systems zur Ortsbestimmung im Innenbereich zu verbessern.

Diese Aufgabe wird durch das Verfahren nach Anspruch 1 und das System nach dem nebengeordneten Systemanspruch gelöst.

Die Unteransprüche zeigen weitere vorteilhafte Ausführungen der Erfindung.

Ein Verfahren zur Ermittlung einer ortsbezogenen Funkfeldcharakteristik in einem Gebäude nach einem ersten Aspekt der Erfindung löst diese Aufgabe. In dem Gebäude ist eine Vielzahl von Signalen von Funksendern mittels einer Vorrichtung mit einem Empfänger und einem Prozessor zu empfangen. Das Verfahren umfasst das Ermitteln einer Funkfeldcharakteristik für zumindest eine Position in dem Gebäude durch den Empfänger und Speichern dieser ermittelten Funkfeldcharakteristik zugeordnet zu einer Positionsinformation für die Position durch den Prozessor in einem Speicher. Die Positionsinformation zu der ermittelten Funkfeldcharakteristik wird erfindungsgemäß mittels eines zweiten, unabhängigen Verfahrens zur Ortsbestimmung ermittelt.

Das Verfahren zum Ermitteln der Positionsinformation ist unabhängig von der Ermittlung der ortsbezogenen Funkfeldcharakteristik, insbesondere wird die ortsbezogene Funkfeldcharakteristik selbst nicht zur Ermittlung der Positionsinformation herangezogen. Die Vorrichtung wird daher ein Positionsermittlungsmittel aufweisen.

Die unabhängige aber automatisierte Ermittlung der Positionsinformation ersetzt eine manuelle Eingabe und ist sowohl schneller als auch weniger fehleranfällig hinsichtlich Genauigkeit der Ermittlung der Positionsinformation und Eingabefehlern der ermittelten Positionsinformation. Damit ermöglicht das Verfahren eine zügige Erstellung einer Datenbank für das Gebäude mit gespeicherten ermittelten Funkfeldcharakteristiken und jeweils zugeordneter Positionsinformation. Das Verfahren ist nun automatisiert ausführbar und damit deutlich schneller als eine manuelle Eingabe der Positionsinformation. Die Datenbank kann dann selbst die Grundlage für eine Positionsermittlung nach dem bekannten Verfahren unter Verwendung des Empfängers bilden.

Das unabhängige Verfahren zur Ortsbestimmung ermittelt die Positionsinformation bevorzugt unter Verwendung eines temporär oder permanent installierten unabhängigen Systems zur Ortsermittlung. Gemäß einer vorteilhaften Ausbildung des Verfahrens zur Ermittlung eines ortsbezogenen Funkfeldcharakteristik ermittelt das unabhängige Verfahren zur Ortsbestimmung die Positionsinformation auf Grundlage einer Nahbereichsfunkkommunikation in Ultra-Breitband-Technologie UWB (englisch Ultra-Wide Band).

Die Verwendung der UWB-Funktechnologie ist besonders vorteilhaft, da Funksignale großer Bandbreite weniger anfällig für selektiven Schwund infolge Mehrwegeausbreitung sind. Daher ist ein darauf basierendes Verfahren zur Ermittlung einer Positionsinformation innerhalb von Gebäuden zuverlässig und genau. Gleichzeitig wird die Funkfeldbelastung in dem Gebäude durch die kurzen Pulsdauern der Funksignale großer Frequenzbandbreite minimiert.

Das Verfahren zur Ermittlung einer ortsbezogenen Funkfeldcharakteristik einer weiteren vorteilhaften Ausführung führt die Schritte Ermitteln einer Funkfeldcharakteristik für die Position in dem Gebäude, Ermitteln der Positionsinformation zu der ermittelten Funkfeldcharakteristik mittels eines unabhängigen Verfahrens zur Ortsbestimmung und Speichern der ermittelten Funkfeldcharakteristik zugeordnet zu einer Positionsinformation für die Position für jede bestimmte Position in dem Gebäude in regelmäßigen oder unregelmäßigen Zeitabständen wiederholt aus.

Somit werden Veränderungen in dem Gebäude, die Auswirkungen auf die ortbezogene Funkfeldcharakteristik haben, erfasst und die Genauigkeit der Ortsbestimmung innerhalb des Gebäudes bleibt trotz Veränderungen erhalten. Die ist insbesondere für Umgebungen interessant, die sich auf Grund ihrer Nutzung öfter ändern, beispielweise Museen mit wechselnden Ausstellungen.

Bevorzugt weist der Verfahrensschritt Ermitteln der Positionsinformation eine höhere Genauigkeit bei der Positionsermittlung auf, als eine Genauigkeit, die für eine Positionsermittlung auf Basis der ermittelten Funkfeldcharakteristiken erzielbar ist.

Damit ist die Genauigkeit der mittels des Verfahrens ermittelten Datenbank der positionsbezogenen Funkfeldcharakteristiken durch Verwendung des erfindungsgemäßen Verfahrens nicht verringert, gegenüber manuellen Verfahren der Positionsermittlung sogar verbessert.

Es ist weiter vorteilhaft, wenn das Verfahren zur Ermittlung einer ortsbezogenen Funkfeldcharakteristik ausgelegt ist, eine aktuelle Positionsinformation der Vorrichtung mittels des unabhängigen Verfahrens zur Ortsbestimmung zu bestimmen und auszugeben, wenn keine direkte Positionsbestimmung mittels einer empfangenen Funkfeldcharakteristik möglich ist.

Damit kann das erfindungsgemäße Verfahren ein redundantes Verfahren zur Positionsermittlung auf Basis der ortsbezogenen Funkfeldcharakteristiken bereitstellen, das eine Positionsermittlung auch in Bereichen des Gebäudes ermöglicht, in denen zumindest zeitweise kein Funksignal eines Funksenders empfangen werden kann. Die Zuverlässigkeit des Gesamtsystems aus Positionsermittlung auf Basis der ortsbezogenen Funkfeldcharakteristiken und Positionsermittlung mittels des unabhängigen Verfahrens ist somit gegenüber einem bekannten System zur Positionsermittlung auf Basis der ortsbezogenen Funkfeldcharakteristiken erhöht.

Ein zweiter Aspekt der Erfindung betrifft ein System zur Ermittlung einer ortsbezogenen Funkfeldcharakteristik in einem Gebäude. In dem Gebäude kann eine Vielzahl von Signalen von Funksendern empfangen werden. Das System umfasst eine Vorrichtung mit einem Empfänger, einem Prozessor und einem Speicher. Der Empfänger ist eingerichtet, eine Funkfeldcharakteristik für zumindest eine Position in dem Gebäude zu ermitteln. Der Prozessor ist eingerichtet, die ermittelte Funkfeldcharakteristik zugeordnet zu einer Positionsinformation für die Position in dem Speicher zu speichern. Ein Positionsermittlungsmittel des Systems ist dafür ausgelegt, die Positionsinformation zu der ermittelten Funkfeldcharakteristik mittels eines unabhängigen Verfahrens zur Ortsbestimmung zu bestimmen.

Es ist besonders vorteilhaft, wenn das System zur Ermittlung einer ortsbezogenen Funkfeldcharakteristik das Positionsermittlungsmittel als separate Vorrichtung mit einer Kommunikationsschnittstelle, insbesondere einer USB-Schnittstelle, zu der Vorrichtung auslegt.

Damit kann das Positionsermittlungsmittel für den Vorgang der Erstellung der Datenbank mit ortsbezogenen Funkfeldcharakteristiken in Verbindung mit der Vorrichtung, die beispielsweise als Smartphone oder tragbarer Computer mit einem Anwendungsprogramm für Positionsermittlung auf Grundlage der ortsbezogenen Funkfeldcharakteristik ausgelegt ist, verbunden werden. Die separate Vorrichtung wird nach Abschluss der Erstellung der Datenbank getrennt, da sie für die Positionsermittlung auf Grundlage der ortsbezogenen Funkfeldcharakteristik selbst nicht mehr erforderlich ist. Damit ist eine wirtschaftlich vorteilhafte Trennung der der Aufgaben "Kalibrierung, Kommissionierung, Inbetriebnahme" einerseits und "Betrieb" andererseits in getrennt auszubildenden Einheiten möglich.

In einer bevorzugten Ausführung des Systems zur Ermittlung einer ortsbezogenen Funkfeldcharakteristik nutzt das System eine autonome mobile Vorrichtung als Träger.

Das erfindungsgemäße System stellt eine vollständig automatisierte Ermittlung einer Datenbank mit ortsbezogenen Funkfeldcharakteristiken bereit. Es ist besonders vorteilhaft, wenn eine autonom operierende mobile Vorrichtung sich in dem Gebäude selbständig bewegt und dabei die ortsbezogenen Funkfeldcharakteristiken ermittelt und speichert. Damit ist der Vorgang einer Kommissionierung eines Systems zur Ermittlung von Positionsinformation auf Basis von ortsbezogenen Funkfeldcharakteristiken wirtschaftlich effizient und hochgenau auszuführen.

Unter Verwendung einer autonomen mobilen Vorrichtung als Träger entfällt die Notwendigkeit, dass die Kommissionierung des Systems zur Lokalisierung mittels einer ortsbezogenen Funkfeldcharakteristik durch eine Person innerhalb des Gebäudes vorgenommen wird. Somit ist die Kommissionierung und insbesondere eine nachträgliche erneute Kalibrierung des Systems zur Lokalisierung mittels einer ortsbezogenen Funkfeldcharakteristik auch ohne Betreten des Gebäudes möglich.

Das System zur Ermittlung eines ortsbezogenen Funkfeldcharakteristik einer vorteilhaften Ausführung nutzt als autonome mobile Vorrichtung eine flugfähige Drohne, insbesondere einen Quadrocopter oder einen autonomen Haushaltsroboter, zum Beispiel einen Reinigungsroboter.

Sowohl flugfähige als auch selbstfahrende autonom operierende Vorrichtungen sind bekannt und werden zukünftig sicher vermehrt genutzt. Das erfindungsgemäße System ist besonders geeignet, diese bereits existierenden autonomen Vorrichtungen zu nutzen, um das Gebäude hinsichtlich seiner ortsbezogenen Funkfeldcharakteristiken aufzunehmen, ohne dass ein großer Personalaufwand für einen Errichter oder einen Betreiber eines Systems zur Ermittlung von Positionsinformation auf Basis von ortsbezogenen Funkfeldcharakteristiken entsteht.

Im Folgenden werden Ausführungsbeispiele der Erfindung anhand der Figuren näher erläutert.
- Fig. 1: zeigt ein einfaches Flussdiagramm eines Ausführungsbeispiels des erfindungsgemäßen Verfahrens, und
- Fig. 2: zeigt ein einfaches Blockschaltbild eines Ausführungsbeispiels des erfindungsgemäßen Systems.

Funkbaken-basierte Systeme zur Ortsbestimmung (auch: Lokalisierung) basieren auf einem Sender-Empfänger-Prinzip. Dazu werden in einem Raum oder über ein oder mehrere Gebäude hinweg kleine Funksender als Signalgeber platziert, die Navigationssignale in festen Zeitintervallen senden. Kommt ein mobiler Empfänger in die Reichweite zumindest eines der Funksender, so kann eine eindeutige Kennung des Senders aus dem Navigationssignal identifiziert und eine Signalstärke des empfangenen Navigationssignals ermittelt werden. Die Position des Empfängers im zweidimensionalen Raum kann z. B. mittels Trilateration oder "Fingerprinting" ermittelt werden.

Zur Ermittlung eines Standortes in einem dreidimensionalen Raum mittels Trilateration sind vier Sender in Reichweite des mobilen Empfängers erforderlich. Dabei wird eine Entfernung zu jedem der Sender abgeschätzt und ein Schnittpunkt von 4 Kugeloberflächen mit ihren Mittepunkten um die Sender und mit einem Radius, der dem jeweiligen Abstand entspricht, durch Lösen eines Gleichungssystems ermittelt. Beim "Fingerprinting" können dagegen die 4 empfangenen Signale nach dem RSSI (Indikator für die Empfangsfeldstärke) sortiert werden. Dies führt bei 4 Empfangssignalen zu 4! (=24) Sequenzen der Sender, die eindeutig zuzuordnen sind. Somit kann zwischen 4 verschiedenen Gebiete für einen Ort, z.B. ein großes Gebäude, unterschieden werden. Diese Gebiete müssen keine regelmäßige oder sonst wie systematische Geometrie haben und insbesondere nicht nahtlos in einander übergehen. Zudem können die einzelnen Gebiete auch sehr klein sein, typischerweise z.B. einige Zentimeter.

Unter "Fingerprinting" in lokalen Funknetzwerken, zum Beispiel auch WLANs, versteht man also allgemein das Aufzeichnen von vorhandenen WLAN-Signalen an einem bestimmten Ort und zu einer bestimmten Zeit. In der Regel werden von WLAN-Netzwerkzugangsgeräten (Routern) ausgestrahlte Sendesignale aufgezeichnet. Durch Erfassung einer MAC-Adressen, eines Namens des WLANs sowie der Empfangssignalstärke der empfangenen WLAN-Signale (RSSI) kann ein charakteristischer Fingerabdruck der empfangbaren WLANs für den Ort der Messung erstellt werden.

Die MAC-Adresse (Media-Access-Control-Adresse, auch physische Adresse oder Geräteadresse) ist die Hardware-Adresse eines einzelnen Netzwerkgeräts, die als eindeutiger Identifizierer des Geräts in einem Rechnernetz dient.

Ein eindeutiger Identifizierer (englisch: Service Set Identifier, abgekürzt: SSID) ist ein frei wählbarer Name eines Netzwerkgeräts, durch den es in dem Netzwerk ansprechbar wird. Diese Kennung wird oftmals manuell von einem Benutzer eingegeben und ist daher als eine Zeichenkette, die für Menschen leicht lesbar ist, ausgelegt. Allgemein kann die SSID auch als Netzwerkname des WLANs bezeichnet werden.

Die Empfangssignalstärke (engl. Received Signal Strength Indicator, abgekürzt: RSSI) stellt einen Indikator für die Empfangsfeldstärke kabelloser Kommunikationsanwendungen am Ort eines Empfängers dar. Die RSSI hat keine festgelegte Einheit und wird abhängig von der jeweiligen Anwendung interpretiert. Innerhalb eines Kommunikationsstandards wie IEEE 802.11 kann es verschiedene Definitionen für die RSSI geben, wobei in der Regel ein höherer Wert einer höheren Empfangsfeldstärke und somit einem besseren Empfang entspricht. Mit einem geräteabhängigen Skalierungsfaktor kann der RSSI-Wert als Leistungspegel in der Einheit dBm ausgedrückt werden.

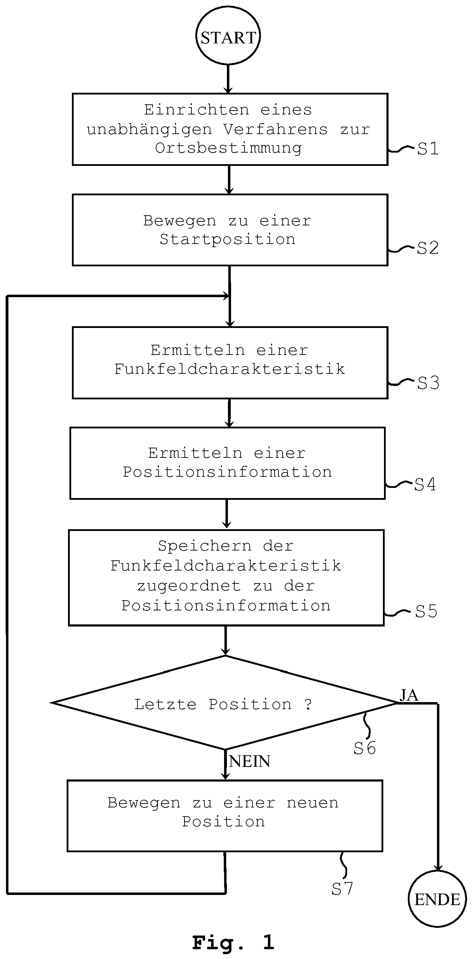

Fig. 1 zeigt ein einfaches Flussdiagramm einer bevorzugten Ausführung des erfindungsgemäßen Verfahrens.

Das Verfahren umfasst nach dem Start zunächst einen Schritt S1, in dem ein unabhängiges Verfahren zur Ortsbestimmung in einem Bereich eingerichtet wird, in dem eine Erfassung der Funkfeldcharakteristik zu einer Kalibrierung eines Verfahrens zur Positionsbestimmung mittels über den Bereich verteilt angeordneter Funkbaken durchgeführt wird.

Der Bereich kann eine Gebäude mit einer Vielzahl an Räumen, ebenso auch den unmittelbaren Umgriff des Gebäudes umfassen.

Das unabhängiges Verfahren zur Ortsbestimmung kann mittels Aufstellen und Inbetriebnahme von Referenzsendern erfolgen, die an geeigneten Orten und in geeigneter Lage zueinander angeordnet werden.

Die Anzahl und die Positionierung der einzelnen Referenzsender sind so zu wählen, dass eine Ortsbestimmung einer Vorrichtung mit einem Empfänger basierend auf den jeweiligen empfangenen Funksignalen der Referenzsender mit einer Genauigkeit der Ortsbestimmung erfolgt, die höher als eine Genauigkeit der Ortsbestimmung auf Basis der ortsbezogenen Funkfeldcharakteristik ist.

Das Einrichten des unabhängigen Verfahrens zur Ortbestimmung kann dauerhaft (permanent) in dem Gebäude erfolgen, oder lediglich für die Zeitdauer der Ausführung des erfindungsgemäßen Verfahrens vorgenommen werden.

Weiter wird in Schritt S1 die mobile Vorrichtung zur Ermittlung der ortsbezogenen Funkfeldcharakteristik in Betrieb genommen. Dies kann beispielsweise die Herstellung einer Verbindung zwischen der mobilen Vorrichtung mit einem integrierten Empfänger zur Ermittlung der Funkfeldcharakteristik und einem auf der mobilen Vorrichtung implementierten Anwendungsprogramm und einer davon getrennt ausgebildeten Vorrichtung umfassen. Die getrennt ausgebildete Vorrichtung ist spezifisch ausgelegt zur Ausführung des unabhängigen Verfahrens zur Ortsbestimmung und übermittelt an die mobile Vorrichtung eine ermittelte aktuelle Positionsinformation der getrennt ausgebildeten Vorrichtung. Die aktuelle Positionsinformation der getrennt ausgebildeten Vorrichtung entspricht der aktuellen Positionsinformation und der damit bezeichneten aktuellen Position der mobilen Vorrichtung.

Die mobile Vorrichtung und die separat ausgebildete Vorrichtung können ebenso integriert, also zum Beispiel in einem in einem gemeinsamen Gehäuse, ausgeführt sein.

In einem auf Schritt S1 folgenden Schritt S2 wird nun die mobile Vorrichtung und die separat ausgebildete Vorrichtung zu einer Startposition bewegt, an der die Ermittlung der Funkfeldcharakteristik beginnt.

In einem Schritt S3 wird die ortbezogene Funkfeldcharakteristik für eine aktuelle Position der mobilen Vorrichtung ermittelt.

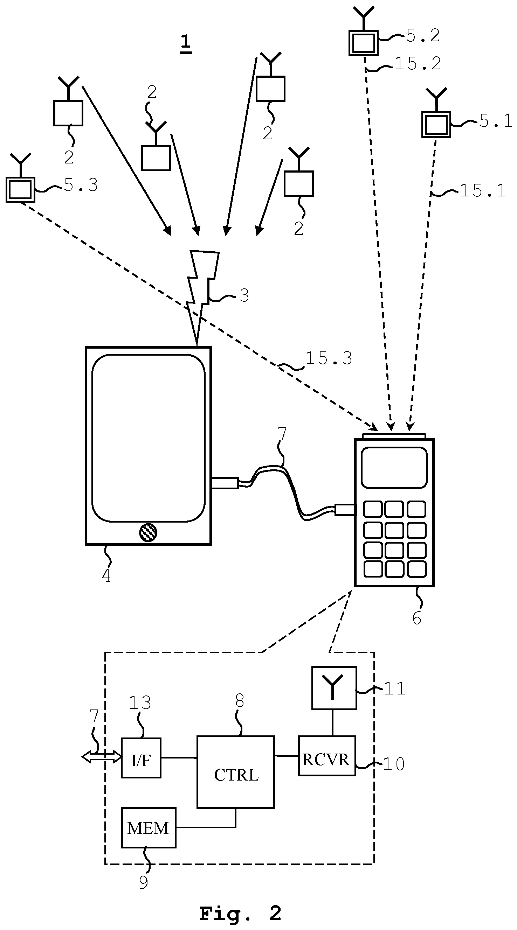

In einem unmittelbar auf Schritt S3 folgend oder parallel zu Schritt S3 ausgeführtem Schritt S4 wird die Positionsinformation der aktuellen Position der mobilen Vorrichtung und die separat ausgebildete Vorrichtung ermittelt. Die aktuelle Positionsinformation bezeichnet somit den Ort der in Schritt S3 ortsbezogen ermittelten Funkfeldcharakteristik. Dabei wird ein unabhängiges Verfahren zur Ortsbestimmung, das auf der separat ausgebildeten Vorrichtung implementiert ist, genutzt. Das unabhängige Verfahren zur Ortsbestimmung wird mit Bezug zu Fig. 2 näher erläutert.

In Schritt S5 wird anschließend die ortsbezogen ermittelte Funkfeldcharakteristik zugeordnet zu der ermittelten Positionsinformation gespeichert.

Die Speicherung der ortsbezogen ermittelten Funkfeldcharakteristik zugeordnet zu der ermittelten Positionsinformation kann in einem gemeinsamen Datensatz erfolgen.

Alternativ oder zusätzlich kann die Zuordnung der Positionsinformation zu der ortsbezogen ermittelten Funkfeldcharakteristik mittels eines jeweiligen Zeitstempels, der den gleichen Wert aufweist, erfolgen.

Anschließend wird in Schritt S6 geprüft, ob nach der ortsbezogenen Funkfeldcharakteristik für die aktuelle Position die ortsbezogene Funkfeldcharakteristik für weitere Positionen in dem Gebäude zu ermitteln ist. Ist die ortsbezogene Funkfeldcharakteristik für weitere Positionen in dem Gebäude zu ermitteln, also die aktuelle Position nicht die letzte Position ("NEIN"), so wird die Vorrichtung in einem Schritt S7 zu einer neuen Position bewegt. In der neuen Position werden Schritte S3, S4, S5 und S6 erneut, ausgeführt.

Wird in Schritt S6 hingegen ermittelt, dass nach der aktuellen Position die ortsbezogene Funkfeldcharakteristik für keine weiteren Positionen in dem Gebäude zu ermitteln ist, also die aktuelle Position die letzte Position ("JA") ist, so wird das Verfahren nach Schritt S7 beendet.

Die Schleife mit den Schritten S3 bis S7 wird jeweils für alle Positionen in dem Gebäude durchlaufen, für die die ortsbezogene Funkfeldcharakteristik zu bestimmen ist.

Die Schleife mit den Schritten S3 bis S7 kann alternativ auch lediglich für Positionen in dem Gebäude durchlaufen werden, für die aufgrund von Veränderungen eine veränderte ortsbezogene Funkfeldcharakteristik zu erwarten ist.

Veränderungen können beispielsweise Veränderungen in einem Raumzuschnitt, in einer Möblierung der Räume, in einer räumlichen Verteilung der Funksender, deren Funksignale die ortsbezogene Funkfeldcharakteristik maßgeblich erzeugen, umfassen.

Das Verfahren mit den Schritten S1 bis S7 kann einmalig bei Inbetriebnahme, zum Beispiel für eine Kalibrierung und/oder Kommissionierung eines Gebäudetechniksystems ausgeführt werden.

Alternativ oder zusätzlich kann das Verfahren mit den Schritten S1 bis S7 auch zu festgelegten Zeitpunkten, in bestimmten regelmäßigen oder unregelmäßigen Zeitabständen ausgeführt werden, um erwartete oder unerwartete Veränderungen der ortsbezogenen Funkfeldcharakteristik zu erfassen.

Fig. 2 zeigt ein einfaches Blockschaltbild eines Ausführungsbeispiels des erfindungsgemäßen Systems.

Die Erfindung ist insbesondere vorteilhaft für die Kommissionierung eines Systems 1 zur Positionsbestimmung (Lokalisierung) innerhalb oder im Umfeld geschlossener Anlagen, insbesondere Gebäude einzusetzen.

Ohne Einschränkung wird im Folgenden von einem Gebäude ausgegangen, in dem eine Vielzahl Funksender 2 angeordnet ist. Die Funksender 2 senden jeweils ein Funksignal aus, dessen Sendeleistung vergleichsweise gering sein kann. Die Funksender sind so über das Gebäude verteilt angeordnet, dass vorzugsweise an jedem Ort des Gebäudes jeweils zumindest einen Teil der Funksignale empfangen werden kann.

Eine mobile Vorrichtung 4 kann sich innerhalb des Gebäudes weitgehend frei bewegen. Insbesondere kann eine Person die mobile Vorrichtung 4 innerhalb des Gebäudes zu unterschiedlichen Orten mitführen.

Die mobile Vorrichtung 4 kann ein Mobilfunkgerät mit erweiterter Funktionalität (Smartphone) oder ein tragbarer Computer, beispielsweise ein Tablet, Notebook oder auch ein Kommissionierungsgerät sein. Insbesondere kann die mobile Vorrichtung 4 ein Kommissionierungsgerät für eine Gebäudetechnikvorrichtung, ein Sensornetzwerk oder ein System 1 zur Positionsbestimmung innerhalb von Gebäuden (abgekürzt IPS - englisch: Indoor Positioning System) sein.

Die mobile Vorrichtung 4 verfügt über zumindest eine Empfangseinrichtung ausgelegt zum Empfang von Funksignalen der Funksender 2. Damit kann die mobile Vorrichtung 4 mit der Empfangseinrichtung eine Funkfeldcharakteristik 3 des Funkfelds im Übertragungsfrequenzband der Funksignale der Funksender 2 aufnehmen. Diese Funkfeldcharakteristik 3 ist aufgrund der Verteilung der Funksender 2 über den Bereich des Gebäudes ortsabhängig. Ortsabhängig heißt, dass für unterschiedliche Orte innerhalb des Gebäudes jeweils eine kennzeichnende, ortsabhängige Funkfeldcharakteristik mittels der Empfangseinrichtung zu ermitteln ist.

Die mobile Vorrichtung 4 verfügt weiter über einen Prozessor und Speicherkapazität. Auf der mobilen Vorrichtung läuft ein Anwendungsprogramm, das eine Ortsbestimmung der mobilen Vorrichtung 4 auf Basis einer Auswertung der ermittelten Funkfeldcharakteristik 3 leistet. Dies kann in einem einfachen Fall durch Vergleich der für eine augenblickliche Position der mobilen Vorrichtung 4 ermittelten Funkfeldcharakteristik 3 mit einer Vielzahl von in einer Datenbank ortsbezogen gespeicherten Funkfeldcharakteristiken 3 erfolgen. Derartige Verfahren zur Positionsermittlung sind im Grundsatz bekannt und unter dem Begriff "Fingerprinting" eingeführt.

Die Datenbank mit ortsbezogen gespeicherten Funkfeldcharakteristiken 3 kann dabei lokal in dem Speicher der mobilen Vorrichtung 4 abgelegt sein, oder das Anwendungsprogramm greift über eine Kommunikationsverbindung auf die auf einem Server gespeicherte Datenbank zu.

Alternativ oder zusätzlich kann das Anwendungsprogramm auch auf einem Server ausgeführt werden und auf der mobilen Vorrichtung 4 läuft lediglich eine Benutzeroberfläche sowie eine Ermittlung der ortsbezogenen Funkfeldcharakteristik 3. Die ermittelte ortsbezogene Funkfeldcharakteristik wird für diesen Fall zur Ermittlung der Positionsinformation über die Kommunikationsverbindung an den Server übertragen.

Die Empfangseinrichtung kann weiter dafür ausgelegt sein, eine Funkverbindung zu einem Funknetz, insbesondere auch zellularen Mobilfunknetz herzustellen. Alternativ oder zusätzlich kann die Empfangseinrichtung dafür ausgelegt sein, eine Kommunikationsverbindung zu einer getrennt ausgeführten Vorrichtung 6 herzustellen.

Die getrennt ausgeführte Vorrichtung 6 (kurz: Vorrichtung 6) ist in dem in Fig. 2 dargestellten Fall getrennt zu der mobilen Vorrichtung 4 ausgeführt und mit der mobilen Vorrichtung 4 mittels einer Datenverbindung 7 verbunden.

Beispielsweise kann die Datenverbindung 7 über einen USB- Anschluss hergestellt werden. Andere leitungsgebundene oder funkbasierte Verbindungen sind ebenso möglich.

Alternativ kann die Vorrichtung 6 in die mobile Vorrichtung 4 integriert ausgeführt sein. Ebenso kann die Vorrichtung 6 integriert, aber trennbar ausgeführt sein, zum Beispiel als eine Einschubkarte für einen Steckplatz der mobilen Vorrichtung 4.

Die Vorrichtung 6 umfasst ein Steuermittel 8 mit zumindest einem Prozessor, ein Speichermittel 9, sowie einen Navigationsempfänger 10.

Der Navigationsempfänger 10 ist insbesondere dafür ausgelegt, über eine Antenne 11 der Vorrichtung 6 aufgenommene Navigationssignale 15.1, 15.2, 15.3 der Navigationssender 5.1, 5.2, 5.3 zu empfangen.

Der Navigationsempfänger 10 kann eine Vorverarbeitung der aufgenommenen Navigationssignale 15.1, 15.2, 15.3 durchführen. Alternativ oder zusätzlich kann der Navigationsempfänger 10 eine Auswertung der empfangenen Navigationssignale 15.1, 15.2, 15.3 ausführen.

Alternativ kann das Steuermittel 8 eine Auswertung der empfangenen Navigationssignale 15.1, 15.2, 15.3 ausführen.

Die Auswertung der Navigationssignale 15.1, 15.2, 15.3 ermöglicht eine Positionsbestimmung der Vorrichtung 6 innerhalb des Gebäudes.

Besonders bevorzugt ermöglicht die Auswertung der Navigationssignale 15.1, 15.2, 15.3 eine Positionsbestimmung der Vorrichtung 6 in dem Gebäude mit einer höheren Positionsgenauigkeit als dies der mobilen Vorrichtung 4 auf Grundlage der ortsbezogenen Funkfeldcharakteristik möglich ist.

In einer bevorzugten Ausführungsform sind die Navigationssignale 15.1, 15.2, 15.3 Signale in einem UWB-Format.

Ultra-Breitband-Technologie (abgekürzt: UWB; englisch: Ultra-WideBand) beschreibt einen Ansatz für Nahbereichsfunkkommunikation. Kennzeichnend für die UWB-Technologie (UWB-Verfahren) ist die Nutzung eines besonders großen Frequenzbereichs mit einer Bandbreite von mindestens 500 MHz oder von mindestens 20 % des arithmetischen Mittelwertes einer unteren und oberen Grenzfrequenz des genutzten für die Übertragung genutzten Frequenzbandes.

Bei UWB-Verfahren werden Impulse von möglichst kurzer Pulsdauer erzeugt. Das über eine Antenne abgestrahlte Spektrum ist entsprechend den Gesetzen der Fourier-Transformation umso breitbandiger, je kürzer die Pulsdauer ist. Ein wesentliches Kennzeichen von UWB ist, dass die gesamte Sendeleistung von wenigen Milliwatt auf einen so großen Frequenzbereich verteilt wird, dass für den Funkbetrieb schmalbandiger Übertragungsverfahren keine Störungen zu erwarten sind.

Im Gegensatz zur üblichen Funktechnik gibt es für UWB-Funksignale keine Trägerfrequenz, die moduliert wird. Da Einzelpulse erzeugt werden, wird häufig Pulsphasenmodulation (auch Pulspositionsmodulation; englisch: Pulse-Position Modulation, abgekürzt: PPM) genutzt. Ebenso können die Polarität und die Amplitude der Impulse geändert werden. Mehrere UWB im gleichen Gebiet sind daher ohne gegenseitige Störung in einem zeitbasieren Mehrfachzugriffsverfahren (TDMA) zu trennen.

Ein wesentliches Kennzeichen von UWB ist, dass die gesamte Sendeleistung, zum Beispiel in Höhe von lediglich wenigen mW, über ein weites Frequenzband verteilt wird, so dass für einen parallelen Funkbetrieb mittels schmalbandiger Übertragungsverfahren keine Störungen zu erwarten sind.

UWB bietet die Möglichkeit eine Positionsbestimmung für beispielsweise Sensornetzwerke realisieren, um so Bewegungsmelder durch Mauern hindurch zu vernetzen.

Die große Überragungsbandbreite der UWB-Technologie ermöglicht gegenüber schmalbandigen Funkübertragungsverfahren verbesserte Möglichkeiten zur Unterdrückung von Interferenz aufgrund Mehrwegeausbreitung. Damit ist die UWB-Technologie für den Bereich von Gebäuden und Innenräume besonders vorteilhaft.

Zum Beispiel können die Navigationssignale 15.1, 15.2, 15.3 hinsichtlich einer jeweiligen Empfangsfeldstärke (RSSI) und einer in dem jeweiligen Navigationssignal 15.1, 15.2, 15.3 enthaltenen eindeutigen Kennung des das Navigationssignal 15.1, 15.2, 15.3 sendenden Navigationssenders 5.1, 5.2, 5.3 ausgewertet werden.

In Fig. 2 sind die Navigationssender 5.1, 5.2, 5.3 als zu den Funksendern 2 unterschiedliche Sender angenommen, die somit ein unabhängiges Verfahren zur Ortsbestimmung gegenüber dem Verfahren zur Ortsbestimmung mittels Auswertung der ortsbezogenen Funkfeldcharakteristik ermöglichen.

Ein unabhängiges Verfahren zur Ortsbestimmung gegenüber dem Verfahren zur Ortsbestimmung mittels Auswertung der ortsbezogenen Funkfeldcharakteristik im Sinne der Erfindung kann auch durch eine unabhängige Signalauswertung, beispielsweise eine unabhängige Auswertung der Signalinhalte der Funksignale der Funksender 2 realisiert werden. Die Vorrichtung 6 verfügt weiter eine Schnittstelle 13, über die zumindest eine unidirektionale Kommunikationsverbindung 7 zu der mobilen Vorrichtung 4 hergestellt werden kann. In Fig. 2 ist jedoch eine bidirektional ausgeführte Schnittstelle 13 gezeigt. Das Steuermittel 8 überträgt über die Kommunikationsverbindung 7 eine auf Basis der empfangenen Navigationssignale 15.1, 15.2, 15.3 ermittelte Positionsinformation zu der mobilen Vorrichtung 4. Bei einer bidirektionalen Schnittstelle 13 kann die Vorrichtung 6 über eine Benutzeroberfläche der mobilen Vorrichtung 4 gesteuert werden. Damit vereinfacht sich der Aufbau der Vorrichtung 6.

Die Schnittstelle 13 kann als USB-Schnittstelle ausgeführt sein.

Die Navigationssender 5.1, 5.2, 5.3 sind entweder fest über das Gebäude verteilt und somit dauerhaft installiert, oder sind für eine Inbetriebnahme mit einer Kalibrierung des Systems 1 zur Positionsbestimmung innerhalb des Gebäudes lediglich vorübergehend installiert. Die Anzahl und die jeweilige Position der Navigationssender 5.1, 5.2, 5.3 ist so zu wählen, dass über den gesamten Bereich, über den die ortsbezogenen Funkfeldcharakteristik zu ermitteln ist, eine zuverlässige Positionsbestimmung mit dem unabhängigen Verfahren zur Ortsbestimmung möglich ist.

Die mobile Vorrichtung 4 und die Vorrichtung 6 können gemeinsam auf einer autonomen mobilen Vorrichtung als Trägerfahrzeug angeordnet sein.

Die autonome mobile Vorrichtung, beispielsweise ein autonomer Haushaltsroboter kann auf Grundlage des unabhängigen Verfahrens zur Ortsbestimmung in dem Gebäude navigieren. Alternativ oder zusätzlich kann die autonome mobile Vorrichtung eine weitere unabhängig ausgebildete Navigationseinrichtung aufweisen, um innerhalb des Gebäudes zu operieren.

Die in Fig. 2 nicht dargestellte autonome mobile Vorrichtung kann eine durch die mobile Vorrichtung 4 vorgegebene Folge von Positionen innerhalb des Gebäudes selbständig ansteuern, um für jede der Positionen die jeweilige ortsbezogene Funkfeldcharakteristik 3 zu ermitteln.

Alternativ oder zusätzlich kann die autonome mobile Vorrichtung eine zur Erfüllung ihrer primären Aufgabe, zum Beispiel Bodenreinigung, vorgegebenen Weg innerhalb des Gebäudes verfolgen und in festgelegten räumlichen Abständen oder zeitlichen Intervallen die jeweilige ortsbezogene Funkfeldcharakteristik 3 ermitteln.

## Patentansprüche

1. Verfahren zur Ermittlung einer ortsbezogenen Funkfeldcharakteristik in einem Gebäude mittels einer Vorrichtung mit einem Empfänger und einem Prozessor, wobei in dem Gebäude eine Vielzahl von Signalen von Funksendern empfangbar ist, und das Verfahren die folgenden Schritte umfasst:
Ermitteln einer Funkfeldcharakteristik für zumindest eine Position in dem Gebäude,
Speichern der ermittelten Funkfeldcharakteristik zugeordnet zu einer Positionsinformation für die Position umfasst, und
**dadurch gekennzeichnet ist, dass**
ein Ermitteln der Positionsinformation zu der ermittelten Funkfeldcharakteristik mittels eines unabhängigen Verfahrens zur Ortsbestimmung erfolgt.

2. Verfahren zur Ermittlung einer ortsbezogenen Funkfeldcharakteristik nach Anspruch 1, **dadurch gekennzeichnet, dass**
das unabhängige Verfahren zur Ortsbestimmung die Positionsinformation mittels Nahbereichsfunkkommunikation in Ultra-Breitband-Technologie UWB ausführt.

3. Verfahren zur Ermittlung einer ortsbezogenen Funkfeldcharakteristik nach Anspruch 1 oder 2, **dadurch gekennzeichnet, dass**
die Schritte Ermitteln einer Funkfeldcharakteristik für eine Position in dem Gebäude, Ermitteln der Positionsinformation zu der ermittelten Funkfeldcharakteristik mittels eines unabhängigen Verfahrens zur Ortsbestimmung und Speichern der ermittelten Funkfeldcharakteristik zugeordnet zu einer Positionsinformation für die Position für zumindest eine vorbestimmte Position in dem Gebäude in regelmäßigen und/oder unregelmäßigen Zeitabständen wiederholt ausgeführt werden.

4. Verfahren zur Ermittlung einer ortsbezogenen Funkfeldcharakteristik nach einem der Ansprüche 1 bis 3, **dadurch gekennzeichnet, dass**
das unabhängige Verfahren zur Ortsbestimmung eine aktuelle Positionsinformation der Vorrichtung bestimmt und ausgibt, wenn keine Positionsbestimmung mittels einer empfangenen Funkfeldcharakteristik möglich ist.

5. System zur Ermittlung einer ortsbezogenen Funkfeldcharakteristik in einem Gebäude,
wobei in dem Gebäude eine Vielzahl von Signalen von Funksendern empfangbar ist,
und das System eine Vorrichtung mit einem Empfänger, einem Prozessor und einem Speicher umfasst,
wobei der Empfänger eingerichtet ist, eine Funkfeldcharakteristik für zumindest eine Position in dem Gebäude zu ermitteln,
und der Prozessor eingerichtet ist, die ermittelte Funkfeldcharakteristik zugeordnet zu einer Positionsinformation für die Position in dem Speicher zu speichern,
**dadurch gekennzeichnet,**
**dass** ein Positionsermittlungsmittel eingerichtet ist, die Positionsinformation zu der ermittelten Funkfeldcharakteristik mittels eines unabhängigen Verfahrens zur Ortsbestimmung zu bestimmen.

6. System zur Ermittlung einer ortsbezogenen Funkfeldcharakteristik nach Anspruch 5, **dadurch gekennzeichnet,**
**dass** das Positionsermittlungsmittel als separate Vorrichtung mit einer elektrischen Schnittstelle, insbesondere einer USB-Schnittstelle, zu der Vorrichtung ausgelegt ist.

7. System zur Ermittlung einer ortsbezogenen Funkfeldcharakteristik nach Anspruch 5 oder 6, **dadurch gekennzeichnet,**
**dass** das System eine autonome mobile Vorrichtung als Träger nutzt.

8. System zur Ermittlung einer ortsbezogenen Funkfeldcharakteristik nach Anspruch 7, **dadurch gekennzeichnet, dass**
die autonome mobile Vorrichtung eine flugfähige Drohne, insbesondere eine Quadrocopter oder ein autonomer Haushaltsroboter, insbesondere ein Reinigungsroboter, ist.
